**Europäisches Patentamt**

**European Patent Office**

**Office européen des brevets**

(11) Veröffentlichungsnummer: **0 353 467**
**A1**

## (12) EUROPÄISCHE PATENTANMELDUNG

(21) Anmeldenummer: **89112041.2**

(22) Anmeldetag: **01.07.89**

(51) Int. Cl.4: **B01J 23/92 , B01J 38/60 , B01J 38/64 , B01D 53/36**

(30) Priorität: **19.07.88 DE 3824464**

(43) Veröffentlichungstag der Anmeldung:
**07.02.90 Patentblatt 90/06**

(84) Benannte Vertragsstaaten:
**AT BE DE GB IT NL**

(71) Anmelder: **BASF Aktiengesellschaft**
**Carl-Bosch-Strasse 38**
**D-6700 Ludwigshafen(DE)**

(72) Erfinder: **Hoelderich, Wolfgang, Dr.**
**Mannheimer Strasse 18c**
**D-6710 Frankenthal(DE)**
Erfinder: **Drews, Ronald, Dr.**
**Pranckhstrasse 22**
**D-6700 Ludwigshafen(DE)**
Erfinder: **Scheidsteger, Olaf, Dr.**
**Rheindammstrasse 30**
**D-6800 Mannheim 1(DE)**
Erfinder: **Neth, Norbert, Dr.**
**Ostring 37**
**D-6712 Bobenheim-Roxheim(DE)**
Erfinder: **Hess, Klaus, Dr.**
**Sonnwendstrasse 40**
**D-6702 Bad Duerkheim(DE)**

(54) **Verfahren zum Regenerieren von Katalysatoren.**

(57) Katalysatoren, die für die Entfernung von Stickoxiden aus Abgasen durch Umsetzung mit Ammoniak eingesetzt worden sind, werden dadurch regeneriert, daß man den Katalysator mit wäßrigen Lösungen von Hydroxiden der Elemente der I. und/oder II. Hauptgruppe und/oder Carbonten der I. Hauptgruppedes Periodischen Systems der Elemente und anschließend mit Säuren behandelt.

EP 0 353 467 A1

## Verfahren zum Regenerieren von Katalysatoren

Die vorliegende Erfindung betrifft ein Verfahren zur Regenerierung von Katalysatoren, die für die Entfernung von Stickoxiden aus Verbrennungsabgasen durch Umsetzung mit Ammoniak bei erhöhten Temperaturen eingesetzt worden sind.

Für die Entfernung von $NO_x$ aus Abgasen ist bisher eine Reihe von Verfahren bekannt geworden, z.B. katalytische Verfahren, bei denen das $NO_x$ mit einem Brennstoff, z.B. Erdgas oder Methan, in Gegenwart von Edelmetallen als Katalysatoren nicht-selektiv zu Stickstoff reduziert wird. Diese Verfahren haben aber technisch keine Bedeutung erlangt, da neben den Stickoxiden auch der in den Abgasen vorhandene Sauerstoff umgesetzt wird, was neben dem Nachteil einer unerwünscht hohen Steigerung der Temperatur den weiteren Nachteil eines hohen Verbrauchs an Brennstoff hat, abgesehen davon, daß die Edelmetallkatalystoren nicht vergiftungsfest sind.

Aus diesem Grunde ist auch ein selektiv arbeitendes katalytisches Verfahren entwickelt worden, bei dem die Stickoxide in Gegenwart von Nichtedelmetallkatalysatoren mit Ammoniak selektiv zu Stickstoff reduziert werden. Dieses unter dem Namen SCR-Verfahren (Selective Catalytic Reduction) bekannt gewordene Verfahren, hat zunehmend an technischer Bedeutung gewonnen.

Bei diesem Verfahren wird praktisch der in den Abgasen enthaltende Sauerstoff nicht angegriffen und der Verbrauch an Ammoniak richtet sich allein nach dem Stickoxid-Gehalt der zu behandelnden Abgase.

Für dieses Verfahren werden verschiedene sogenannte SCR-Katalysatoren eingesetzt.

In der US-PS 3 279 884 werden Katalysatoren beschrieben, die katalytisch wirksame Mengen an Vanadin-, Molybdän, und/oder Wolframoxiden enthalten. In der DE-PS 1 253 685 werden darüber hinaus Katalysatoren beschrieben, die auch Manganoxid und/oder Eisenoxid enthalten können.

In der DE-PS 2 458 888 werden für den gleichen Zweck Katalysatoren genannt, die

1. Titan in Form von Oxiden und

2. wenigstens ein Element aus der Gruppe

a) Eisen und Vanadin in Form von Oxiden und/oder Sulfaten und/oder

b) Molybdän, Wolfram, Nickel, Cobalt, Kupfer, Chrom und Uran in Form von Oxiden sowie gegebenenfalls

3. Zinn in Form von Oxiden und

4. Metalle aus der Gruppe Silber Beryllium, Magnesium, Zink, Bor, Aluminium, Yttrium, Seltene Erdmetalle, Silicium, Niob, Antimon, Wismut und Mangan in Form von Oxiden enthalten. Diese Katalysatoren können als Vollkatalysatoren oder auch auf übliche Träger aufgebracht eingesetzt werden.

In der DE-OS 3 438 367 werden Katalysatoren beschrieben, die

1. aus einer binären Oxidverbindung des Titans und Silicium und/oder des Titans und Zirkoniums und oder einer ternären Oxidverbindung des Titans, Zirkoniums und Siliciums sowie

2. 0 bis 5 Gew.-% eines Vanadinoxids und

3. 1 bis 15 Gew.-% mindestens eines Oxides der Elemente Wolfram, Molybdän, Zinn und Cer bestehen.

Stickoxide enthaltende Abgase fallen neben der Salpetersäureherstellung vor allem auch bei der industriellen Verfeuerung fossiler Brennstoffe, z.B. in Kraftwerken an. Während die Abgase von Salpetersäureanlagen neben Stickoxiden praktisch nur noch Stickstoff, nicht umgesetzten Sauerstoff und Wasserdampf enthalten, weisen die aus den industriellen Feuerungsanlagen stammenden Abgase zusätzlich, bedingt durch die Zusammensetzung des fossilen Brennstoffes, Schwefeldioxid und bei Abgasen, die aus der Verbrennung von Kohle stammen je nach Verbrennungsart - ob Feuerungen mit Trocken- oder Schmelzascheabzug-wechselnde Mengen an weiteren Bestandteilen auf, die auch die Katalysatoren schädigen können: Genannt seien z.B. Schwermetalle bzw. Schwermetallverbindungen, insbesondere Verbindungen des Arsens sowie Flugstäube, die aufgrund ihres Alkali- und Erdalkali- sowie Siliciumgehaltes die Katalysatoren schädigen. Diese Schadstoffe kommen auch in den Abgasen von Müllverbrennungsanlagen und Prozeßofenanlagen wie Röstöfen und in Hochöfen der Stahlindustrie und in Öfen der glasverarbeitenden und keramischen Industrie vor.

Der Austausch solcher desaktivierter SCR-Katalysatoren gegen neue Katalysatoren ist ökonomisch wegen der hohen Kosten dieser Katalysatoren nicht sinnvoll abgesehen davon, daß auch die Deponie solcher Katalysatoren nicht unerhebliche Kosten nach sich zieht.

Es hat daher nicht an Vorschlägen gefehlt, solche gebrauchten Katalysatoren zu reaktivieren.

Diese Verfahren basieren z.T. auf einer mechanisch abrasiven Behandlung der desaktivierten Katalysatoren. In der JP-OS 61 259 764 wird vorgeschlagen, die Katalysatoren durch Bürsten mit Stahlbürsten zu reaktivieren. In den Europäischen Offenlegungsschriften 0 203 028 und 0 241 310 wird die Behandlung solcher desaktivierter Katalysatoren mit abrasiven Partikeln, z.B. Sand, in einem fluidisierten Bett beschrieben. Diese mechanischen Methoden sind sehr arbeits- und damit kostenintensiv und erfordern beispielsweise besondere Maßnahmen, um eine Abrasion an unerwünschten Stellen, durch die der Katalysator mechanisch geschädigt wird, zu verhindern (vgl. EP-OS 0 241 310). Diese mechanischen Verfahren sind außerdem auf die Regenerierung von monolithischen Katalysatoren, z.B. Waben- oder Plattenkatalysatoren, beschränkt und lassen sich nicht bei Katalysatoren in Pellet- oder Strangform anwenden.

Es ist auch bekannt, die Katalysatoren durch Behandeln mit Wasser zu regenerieren, um die auf ihnen haftenden alkalischen Verbindungen zu entfernen, jedoch ist diese Methode nur auf diese Schadstoffe beschränkt und auch da wenig effektiv. Aus diesem Grunde ist es auch bekannt, den Katalysator anschließend mit gasförmigem $SO_2$ oder mit wäßrigen Lösungen von Schwefelverbindungen, z.B. Schwefelsäure, Ammoniumhydrogensulfat und dgl., zu behandeln (vgl. EP-OS 0 159 959).

In der JA-OS 63 01 429 wird ein Verfahren zur Regenerierung von mit $SiO_2$ belegten SCR-Katalysatoren beschrieben, das darin besteht, daß man diese mit wäßrigen Lösungen von Fluorwasserstoff behandelt. Abgesehen davon, daß sich diese Arbeitsweise schon dadurch verbietet, daß durch Fluorwasserstoff die Bestandteile des Katalysators selbst, insbesondere das $TiO_2$, angegriffen werden, erfordert das Arbeiten mit Fluorwasserstoff wegen seiner Giftigkeit einen besonderen Aufwand.

In der EP-OS 0 161 206 schließlich ist ein Verfahren zur Regenerierung von SCR-Katalysatoren beschrieben, das darin besteht, daß man die Katalysatoren mit wäßrigen Lösungen von Oxalsäure behandelt und sie anschließend mit Verbindungen des Wolframs imprägniert. Dieses Verfahren ist nicht allgemein anwendbar, sondern lediglich auf die Regenerierung solcher Katalysatoren beschränkt, die durch Schwermetalle wie Vanadium, Nickel oder Eisen verunreinigt sind.

Der vorliegenden Erfindung lag daher die Aufgabe zugrunde, ein Verfahren zur Regenerierung von Katalysatoren, die für die Entfernung von Stickoxiden aus Abgasen durch Umsetzung mit Ammoniak eingesetzt worden sind, bereitzustellen, das es gestattet, desaktivierte SCR-Katalysatoren in einfacher, technisch praktikabler, billiger und umweltfreundlicher Weise zu regenerieren.

Es wurde gefunden, daß diese Aufgabe dadurch gelöst werden kann, daß man den Katalysator mit wäßrigen Lösungen von Hydroxiden der Elemente der I. und/oder II. Hauptgruppe und/oder Carbonten der Elemente der I. Hauptgruppe des Periodischen Systems der Elemente und anschließend mit Säuren behandelt.

Als wäßrige Lösungen kommen die Hydroxide als Elemente der ersten und zweiten Hauptgruppe sowie die Carbonte der Elemente der ersten Hauptgruppe des Periodischen Systems in Betracht, die man in Form von Lösungen mit einer zweckmäßig 50 Gew.-% nicht übersteigenden Konzentrationen einsetzt. Bei den Erdalkalihydroxiden, die nur eine geringe Wasserlöslichkeit haben, setzt man zweckmäßig gesättigte oder nahezu gesättigte Lösungen ein (Löslichkeit von $Ca(OH)_2$ : 0,118 g CaO/100 g $H_2O$, $Ba(OH)_2$ : 3,48 g BaO/100 g H $_2$). Im Falle der besonders bevorzugten Hydroxide und Carbonate des Natriums und Kaliums wählt man besonders bevorzugte Konzentrationen von 0,1 bis 15 Gew.-%. Die Behandlung mit den wäßrigen Lösungen kann bei Raumtemperatur (20° C) durchgeführt werden, sie kann aber auch bei erhöhten Temperaturen von z.B. bis zu 150° C vorgenommen werden. Zweckmäßig arbeitet man jedoch bei Temperaturen unterhalb von 100° C, besonders bevorzugt bei Temperaturen von 40 bis 95° C. Die Dauer der Behandlung richtet sich nach dem Grad der Desaktivierung des Katalysators, der Konzentration der Lösung und der Temperatur und kann von 10 bis 120 min betragen. Die erfindungsgemäße Behandlung mit den wäßrigen Lösungen kann in ruhender oder auch in bewegter Lösung, z.B. in einem von der Lösung durchströmten Steigrohr, erfolgen. Sie kann aber auch, z.B. im Falle monolithischer Katalysatoren, durch Abspritzen des Katalysators mit unter Druck stehender Lösung erfolgen.

Bevor die mit den wäßrigen Hydroxid- bzw. Carbonatlösungen behandelten Katalysatoren der Säurebehandlung unterzogen werden, können diese vorteilhaft einer Behandlung mit Wasser bei 20° C oder erhöhten Temperaturen, zweckmäßig unter 100° C, unterzogen werden.

Als Säuren kann man sowohl organische als auch anorganische Säuren, bevorzugt aber anorganische Säuren, einsetzen. Als Säuren kommen bevorzugt solche in Betracht, die die Bestandteile des Katalysators nicht angreifen. Aus wirtschaftlichen Gründen wird man Salzsäure, Salpetersäure, insbesondere aber Schwefelsäure wählen. Zweckmäßig setzt man die Säuren ebenfalls nicht konzentriert, sondern mit Wasser verdünnt ein. Es hat sich als zweckmäßig erwiesen, 0,01 bis 3 n Säuren einzusetzen. Auch die Säurebehandlung kann, wie die Behandlung mit den Alkalihydroxidlösungen, bei den dort genannten Temperaturen und Zeiten durchgeführt werden.

Die Behandlung kann, wenn nötig, mehrmals wiederholt werden, um die gewünschte Aktivität, insbesondere die Anfangsaktivität, zu erreichen. Sollte ein Austrag an Aktivkomponenten während des Regenerierprozesses erfolgen, so können diese erneut durch Tränkung, Imprägnierung oder sonst bekannte Methoden aufgebracht werden.

Nach der Säurebehandlung wird der Katalysator gegebenenfalls nach einer (weiteren) Waschung mit Wasser getrocknet und ist dann wieder einsatzbereit.

Wesentlich bei dem erfindungsgemäßen Verfahren ist es, daß die Basenbehandlung vor der Säurebehandlung erfolgt und daß jede Behandlung für sich genommen zu keiner Reaktivierung des SCR-Katalysators führt, d.h. nur die Kombination in der angegebenen Reihenfolge ist wirksam.

Die erfindungsgemäße Regenerierung der Katalysatoren ist nicht auf monolithische Katalysatoren beschränkt, sondern kann auch auf ringförmige Katalysatoren oder auf Stränge oder Preßlinge angwandt werden.

Die erfindungsgemäße Behandlung kann vor allem mit Katalysatoren auf Basis von Titanoxiden die katalytische Mengen an Wolfram-, Vanadin- und Molybdänoxiden sowie gegebenenfalls andere Metalloxide und/oder -Sulfate enthalten, wie sie z.B. in der eingangs zitierten DE-PS 24 58 888 beschrieben sind, durchgeführt werden.

Beispiele

Desaktivierte monolithische Katalysatoren auf Basis von $TiO_2$, $WO_3$ und $V_2O_5$ werden in ein Steigrohr vorgelegt und in der in der Tabelle aufgeführten Reihenfolge mit wäßrigen Lösungen von Hydroxiden und wäßrigen Säuren mit Konzentrationen, die ebenso wie die Dauer und Temperatur der Behandlung in der folgenden Tabelle angegeben sind, behandelt. In der folgenden Tabelle bedeuten:

$K_o$ = Anfangsaktivittät des frischen Katalysators

$K_{des}$ = Aktivität des desaktivierten Katalysators

$K_{reg}$ = Aktivität des regenerierten Katalysators

Die K-Werte werden jeweils mit einem synthetischen Rauchgas mit folgender Zusammensetzung: 200 vpm NO, 240 vpm $NH_3$, 500 vpm $SO_2$, 2 Vol.-% $O_2$, 10 Vol.-% Wasserdampf, Rest Stickstoff bei einer Temperatur von 380°C und einer Raumgeschwindigkeit von 21 300 $h^{-1}$ bestimmt.

Die Prozentangaben in der Tabelle bedeuten Gewichtsprozente.

4

Tabelle

| Beispiel | $K_o$ [m/h] | | $K_{des}$ [m/h] | Behandlung I | II | Zwischen-waschung mit $H_2O$ | $K_{reg}$ [m/h] | $K_{des}/K_o$ | $K_{reg}/K_o$ |
|---|---|---|---|---|---|---|---|---|---|
| 1 | 37,5 | Schmelzasche | 25,6 | 1 n NaOH 40°C, 1 h | 1 n $H_2SO_4$ 40°C, 1 T | ja | 34,2 | 0,68 | 0,91 |
| 2[1] | 37,5 | Schmelzasche | 26,9 | 5%ige $H_2O_2$ 40°C, 1 h | – | ja | 25,1 | 0,72 | 0,67 |
| 3[1] | 37,5 | Schmelzasche | 26,9 | 5%ige $H_2SO_4$ 40°C, 1 h | – | ja | 27,5 | 0,72 | 0,73 |
| 4[1] | 42,1 | Schmelzasche | 25,9 | 1 n $H_2SO_4$ 40°C, 1 h | 1 n NaOH 40°C, 1 h | ja | 4,8 | 0,62 | 0,11 |
| 5 | 42,1 | Schmelzasche | 21,6 | 50%ige NaOH 40°C, 1 h | 1 n $H_2SO_4$ 40°C, 1 h | ja | 28,2 | 0,51 | 0,67 |
| 6 | 42,1 | Schmelzasche | 20,5 | 1 n NaOH 40°C, 1 h | 1 n $H_2SO_4$ 40°C, 1 h | ja | 38,4 | 0,49 | 0,91 |
| 7 | 42,1 | Trockenasche | 16,9 | 1 n NaOH 40°C, 1 h | 1 n $H_2SO_4$ 40°C, 1 h | ja | 26,0 | 0,4 | 0,62 |
| 8[1] | 42,1 | Schmelzasche | 16,9 | 1 n NaOH 40°C, 1 h | – | ja | 6,0 | 0,4 | 0,14 |
| 9 | 38,5 | Schmelzasche | 24,3 | 1 n NaOH 40°C, 1 h | 1 n $H_2SO_4$ 40°C, 1 h | ja | 28,9 | 0,63 | 0,75 |
| 10[1] | 38,5 | Schmelzasche | 24,3 | 1 n NaOH 40°C, 1 h | – | ja | 6,2 | 0,63 | 0,16 |
| 11 | 37,5 | Schmelzasche | 26,0 | 1 n NaOH 40°C, 1 h | 1 n $H_2SO_4$ 40°C, 1 h | ja | 33,2 | 0,69 | 0,89 |
| 12 | 37,5 | – | 37,5 | 1 n NaOH 40°C, 1 h | 1 n $H_2SO_4$ 40°C, 1 h | ja | 35,1 | – | 0,94 |
| 13[2] | 42,1 | Schmelzasche | 38,4 | 1 n NaOH 40°C, 1 h | 1 n $H_2SO_4$ 40°C, 1 h | ja | 40,8 | 0,91 | 0,97 |

EP 0 353 467 A1

Tabelle Forts.

| Beispiel | $K_o$ [m/h] | $K_{des}$ [m/h] | Behandlung I | Behandlung II | Zwischen- waschung mit $H_2O$ | $K_{reg}$ [m/h] | $K_{des}/K_o$ | $K_{reg}/K_o$ |
|---|---|---|---|---|---|---|---|---|
| 14 | 42,1 | Schmelzasche 24,3 | 1 n NaOH 20°C, 1 h | 1 n $H_2SO_4$ 20°C, 1 h | ja | 35,3 | 0,58 | 0,84 |
| 15 | 38,5 | Schmelzasche 19,6 | 1 n NaOH 90°C, 1 h | 1 n $H_2SO_4$ 90°C, 1 h | ja | 35,5 | 0,51 | 0,92 |
| 16 | 37,5 | Schmelzasche 20,6 | 0,1 n NaOH 40°C, 1 h | 1 n $H_2SO_4$ 40°C, 1 h | ja | 38,0 | 0,55 | 1,01 |
| 17 | 38,5 | Schmelzasche 27,0 | 3 n NaOH 40°C, 1 h | 1 n $H_2SO_4$ 40°C, 1 h | ja | 38,4 | 0,70 | 1,0 |
| 18 | 42,1 | Schmelzasche 33,0 | 6 n NaOH 40°C, 1 h | 1 n $H_2SO_4$ 40°C, 1 h | ja | 38,1 | 0,78 | 0,90 |
| 19 | 42,1 | Schmelzasche 22,2 | ges. $Ca(OH)_2$ 40°C, 1 h | 1 n $H_2SO_4$ 40°C, 1 h | ja | 37,4 | 0,53 | 0,89 |
| 20 | 38,5 | Schmelzasche 31,1 | ges. $Ba(OH)_2$ 40°C, 1 h | 1 n $H_2SO_4$ 40°C, 1 h | ja | 33,5 | 0,81 | 0,87 |
| 21 | 38,5 | Schmelzasche 23,7 | 1 n $Na_2CO_3$ 40°C, 1 h | 1 n $H_2SO_4$ 40°C, 1 h | ja | 38,5 | 0,62 | 1,0 |
| 22 | 38,5 | Schmelzasche 23,0 | 1 n NaOH 40°C, 1 h | 1 n $HNO_3$ 40°C, 1 h | ja | 32,7 | 0,60 | 0,85 |
| 23 | 38,5 | Schmelzasche 25,4 | 1 n NaOH 40°C, 1 h | 3 n $H_2SO_4$ 40°C, 1 h | ja | 40,2 | 0,62 | 1,02 |

1) Vergleichsversuche

2) Wiederholte Behandlung des Katalysators aus Beispiel 6

Aus der Tabelle ist zu ersehen, daß die die erfindungsgemäße Behandlung der desaktivierten Katalysatoren bessere Ergebnisse bringt als die bekannte Behandlung des gleichen Katalysators mit Wasserstoffperoxid bzw. Schwefelsäure (Beispiele 1-3). Eine Behandlung mit Lauge alleine (Beispiele 8 und 10) ergibt sogar eine weitere Verminderung der Aktivität. Eine Umkehrung der Reihenfolge Hydroxid-Säurebehandlung (Beispiel 4) ergibt ebenfalls eine Verschlechterung. In Beispiel 12, bei dem eine erfindungsgemäße Behandlung an einem ungebrauchten Katalysator vorgenommen wird, ergibt sogar eine Verschlechterung der Anfangsaktivität. Gemäß Beispiel 13 ist ein gemäß Beispiel 6 regenerierter Katalysator einer nochmali-

6

gen erfindungsgemäßen Behandlung unterworfen worden, wobei eine weitere Steigerung der Aktivität erzielt werden konnte. Beispiele 14 und 15 veranschaulichen den Einfluß der Temperatur, wonach bei erhöhter Temperatur von 90°C ein besseres Ergebnis erreicht wird. Beispiele 16 bis 18 sowie Beispiel 5 veranschaulichen den Einfluß der Laugenkonzentration. In Beispielen 19 bis 21 wurden in der I. Behandlungsstufe andere Hydroxide bzw. Carbonte als NaOH eingesetzt.

## Ansprüche

1. Verfahren zur Regenerierung von Katalysatoren, die für die Entfernung von Stickoxiden aus Abgasen durch Umsetzung mit Ammoniak eingesetzt worden sind, dadurch gekennzeichnet, daß man den Katalysator mit wäßrigen Lösungen von Hydroxiden der Elemente der I. und II. Hauptgruppe und/oder Carbonten der Elemente der I. Hauptgruppe des Periodischen Systems der Elemente und anschließend mit Säuren behandelt.

2. Verfahren nach Anspruch 1, dadurch gekennzeichnet, daß man den Katalysator vor der Behandlung mit Säure einer Behandlung mit Wasser unterzieht.

3. Verfahren nach Ansprüchen 1 bis 2, dadurch gekennzeichnet, daß man wäßrige Hydroxid- bzw. Carbonatlösungen einsetzt, deren Konzentration 50 Gew.-% nicht übersteigt.

4. Verfahren nach Ansprüchen 1 bis 3, dadurch gekennzeichnet, daß man als wäßrige Hydroxid- bzw. Carbonatlösung, Natrium und/oder Kaliumhydroxid bzw. Carbonatlösungen einsetzt.

5. Verfahren nach Anspruch 4, dadurch gekennzeichnet, daß die Konzentration der Hydroxid- bzw. Carbonatlösung 0,1 bis 15 Gew.-% beträgt.

6. Verfahren nach Ansprüchen 1 bis 5, dadurch gekennzeichnet, das man als Säuren Salzsäure, Salpetersäure und/oder Schwefelsäure verwendet.

7. Verfahren nach Ansprüchen 1 bis 6, dadurch gekennzeichnet, daß man die Säuren als 0,01 bis 3 n Säuren einsetzt.

**Europäisches Patentamt**

# EUROPÄISCHER RECHERCHENBERICHT

Nummer der Anmeldung

EP 89 11 2041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 070 305  (S. OBAYASHI) --- | | B 01 J 23/92 B 01 J 38/60 |
| A | US-A-4 043 939  (S. KASSOKA) --- | | B 01 J 38/64 B 01 D 53/36 |
| D,A | EP-A-0 159 959  (MITSUBISHI JUKOGYO K.K.) --- | | |
| A | GB-A-2 010 113  (NITTO CHEMICAL INDUSTRY) --- | | |
| A | EP-A-0 221 292  (INTEVEP SA) ----- | | |
| | | | **RECHERCHIERTE SACHGEBIETE (Int. Cl.5)** |
| | | | B 01 J |

Der vorliegende Recherchenbericht wurde für alle Patentansprüche erstellt

| Recherchenort | Abschlußdatum der Recherche | Prüfer |
|---|---|---|
| DEN HAAG | 27-10-1989 | THION M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)